# EUROPÄISCHE PATENTSCHRIFT

(11) **EP 0 599 155 B1**
(45) Veröffentlichungstag und Bekanntmachung des Hinweises auf die Patenterteilung: **28.01.1998**
(21) Anmeldenummer: 93118341.2
(22) Anmeldetag: 12.11.1993
(51) Int. Cl.: H04B 10/08, H04B 10/16

(54) **System zur optischen Nachrichtenübertragung mit faseroptischen Verstärkern und einer Einrichtung zum Überprüfen der Übertragungswege**
Optical transmission system using optical amplifiers and device for testing the transmission path
Système de transmission optique avec des amplificateurs à fibres optiques et dispositif de contrôle de la voie de transmission

(30) Priorität: 21.11.1992 DE 4239187
(43) Veröffentlichungstag der Anmeldung: 01.06.1994
(73) Patentinhaber: ALCATEL ALSTHOM COMPAGNIE GENERALE D'ELECTRICITE, 75008 Paris (FR)
(72) Erfinder: Schleinschok, Rainer, D-71229 Leonberg (DE); Hausser, Rainer, D-70734 Fellbach (DE); Pfeiffer, Thomas, D-70569 Stuttgart (DE); Krimmel, Heinz, D-70469 Stuttgart (DE)
(74) Vertreter: Kugler, Hermann, Dipl.-Phys.

(56) Entgegenhaltungen:
- EP-A- 0 415 438
- EP-A- 0 449 475
- WO-A-91/16773
- PATENT ABSTRACTS OF JAPAN vol. 10, no. 359 (E-460)(2416) 3. Dezember 1986 & JP-A-61 156 930 (NEC)

## Beschreibung

Die Erfindung betrifft ein System nach dem Oberbegriff des Patentanspruchs 1 und einen faseroptischen Verstärker nach dem Oberbegriff des Patentanspruchs 2. Außerdem betrifft die Erfindung ein Verfahren zum Testen eines solchen Systems nach dem Oberbegriff des Patentanspruchs 3.

Systeme der im Oberbegriff des Patentanspruchs 1 bezeichneten Art sind hinreichend bekannt, beispielsweise aus B. Wedding, et al: "10 GBit/s to 260 000 Subscribers Using Optical Amplifier Distribution Network", Contribution for ICC/Supercom'92, Optical Communications 300 Level Session "Impact of Optical Amplifiers on Network Architectures".

In diesen Systemen werden vorzugsweise faseroptische Verstärker verwendet, die ein dotiertes Lichtwellenleiterstück enthalten, das beispielsweise mit Erbium-Ionen dotiert ist. Einen faseroptischen Verstärker, dessen optische Eingangs- und Ausgangsleistung und dessen Pumplicht-Quelle überwacht wird, zeigt zum Beispiel EP 0 415 438 A2.

An optische Nachrichtenübertragungssysteme werden hinsichtlich der Übertragungsqualität, der Verfügbarkeit und der Augensicherheit hohe Anforderungen gestellt.

Um die Augensicherheit zu gewährleisten, ist es notwendig, das System zu überwachen und gegebenenfalls schnell abzuschalten. Mit der Aufgabe der Überwachung und Fehleranzeige in einem Verteilnetz mit Lichtwellenleitern befaßt sich zum Beispiel die DE-A1-41 02 309. Dort handelt es sich um eine Betriebsüberwachung, die dazu dient, daß im Störungsfall, zum Beispiel bei Faserbruch, der Sender abgeschaltet wird. Wenn die Abschaltung erfolgt ist, soll schnell herausgefunden werden, wo die Unterbrechung aufgetreten ist, um einen langen Ausfall des Systems zu verhindern. Die Lokalisation der Störung ist jedoch aufwendig.

Eine Möglichkeit, das System nach der Behebung der Störung vor der Inbetriebnahme zu testen, ist nicht angegeben.

Es ist die Aufgabe der Erfindung, ein System anzugeben, bei dem eine Testmöglichkeit der Übertragungswege im Nicht-Betriebszustand (d.h. vor einer Erst- oder Wiederinbetriebnahme) gegeben ist. Dies wird wie im Patentanspruch 1 angegeben gelöst. Eine weitere Aufgabe der Erfindung ist, einen faseroptischen Verstärker anzugeben, mit dem ein Testen des Systems möglich ist. Dieser ist Gegenstand des Patentanspruchs 2.

Eine weitere Aufgabe der Erfindung ist auch, ein Verfahren zum Testen des Systems anzugeben. Dieses Verfahren ist Gegenstand des Patentanspruchs 3.

Ein Vorteil der Erfindung ist, daß damit beliebige Teilstrecken einzeln und unabhängig voneinander prüfbar sind. Das bedeutet auch, daß nur die betroffenen Teilstrecken abgeschaltet sind und das System an sich betriebsbereit bleibt. Ein weiterer Vorteil ist, daß mit Hilfe der Erfindung einfache Verkabelungsfehler festgestellt werden können. Hinsichtlich der Kosten verhält sich die Erfindung fast neutral, da die notwendige Vorrichtung nur einen geringen Aufwand verursacht.

Die Erfindung wird durch Beispiele anhand der Zeichnung näher erläutert. Es zeigen:
- Fig. 1:: ein optisches Nachrichtenübertragungssystem mit zwei faseroptischen Verstärkern (OA1, OA2),
- Fig. 2:: ein Blockschaltbild eines faseroptischen Verstärkers (OA).

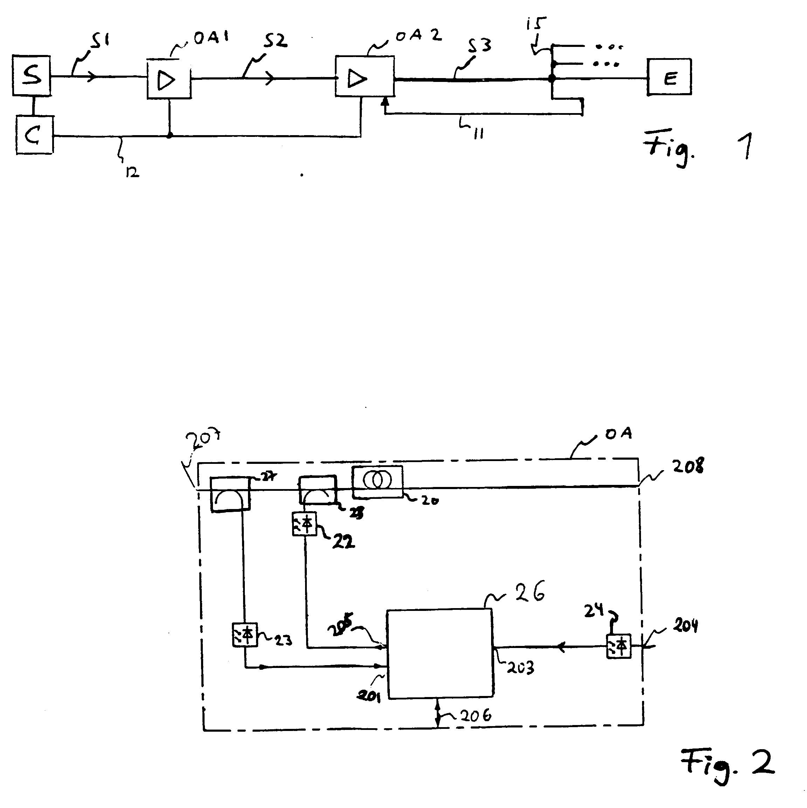

In Fig. 1 ist ein System zur optischen Nachrichtenübertragung über Lichtwellenleiter gezeigt. Zur Vereinfachung der Beschreibung ist in dieser Figur eine sogenannte Punkt-zu-Punkt-Verbindung angegeben. Prinzipiell ist aber auch ein System möglich, bei dem sich der Signalweg aufteilt, zum Beispiel eine Baumstruktur. Besonders in solchen Systemen erweist sich die Erfindung von Vorteil.

Das dargestellte System enthält einen optischen Sender S, zwei faseroptische Verstärker OA1 und OA2, eine zentrale Kontrolleinrichtung C, eine Verzweigungsstelle 15 und einen beispielhaften optischen Empfänger E. Die Verbindung zwischen dem optischen Sender S und dem optischen Empfänger E erfolgt über einen Lichtwellenleiter. Diese Übertragungsstrecke ist aufgeteilt in drei Teilstrecken S1, S2 und S3. Die Teilstrecke S1 verbindet den optischen Sender S mit einem ersten faseroptischen Verstärker OA1. Dieser ist über die Teilstrecke S2 mit einem zweiten faseroptischen Verstärker OA2 verbunden. Die Teilstrecke S3 verbindet den zweiten faseroptischen Verstärker mit der Verzweigungsstelle 15. Die Verzweigungsstelle teilt die Teilstrecken S3 in z.B. vier Zweige auf, die zu den Empfängern E führen. Der optische Sender S und die faseroptischen Verstärker sind über eine Datenleitung 12 mit der zentralen Kontrolleinrichtung verbunden.

Die Datenleitung 12 stellt für die faseroptischen Verstärker einen Bus dar, an den sie angeschlossen sind. Über diese Datenleitung können die einzelnen faseroptischen Verstärker untereinander und mit dem optischen Sender Informationen austauschen.

Von der Verzweigungsstelle 15 führt ein Lichtwellenleiter 11 zurück zum zweiten faseroptischen Verstärker OA2. Dieser Lichtwellenleiter wird als Rückkopplungsfaser (engl.: back-loop fiber) bezeichnet. Damit kann vom zweiten faseroptischen Verstärker OA2 festgestellt werden, ob an der Verzweigungsstelle ein Signal ankommt. Durch die Verzweigungsstelle wird die über die Teilstrecke S3 ankommende optische Lichtleistung im Verhältnis der abgehenden Zweige aufgeteilt, so daß in den Zweigen die Augensicherheit gewährleistet ist.

Bevor darauf eingegangen wird, wie die Erfindung in diesem System arbeitet, wird anhand von Figur 2 der prinzipielle Aufbau eines faseroptischen Verstärkers, wie er in dem System zur Anwendung kommt, erläutert. In dieser Figur sind nur die für die Erfindung relevanten Bestandteile gezeigt.

Der faseroptische Verstärker enthält ein mit Erbium-Ionen dotiertes Lichtwellenleiterstück 20, eine Pumplicht-Quelle 22, die z.B. ein Halbleiterlaser ist, einen ersten und zweiten Photodetektor 23 bzw. 24 und eine Überwachungsvorrichtung 26. Mit dem Lichtwellenleiter des Systems ist der faseroptische Verstärker über einen Eingang 207 und einen Ausgang 208 verbunden. Ein optischer Koppler 27 koppelt einen Teil der Eingangsleistung aus und führt diesen auf den ersten Photodetektor 23. Dieser wandelt sein optisches Eingangssignal in ein elektrisches Signal um, welches auf einen Eingang 201 der Überwachungsvorrichtung 26 geführt wird. Dem optischen Koppler 27 folgt ein weiterer optischer Koppler 28, der das von der Pumplicht-Quelle 22 erzeugte Pumplicht in das dotierte Lichtwellenleiterstück 20 einkoppelt. Die Pumplicht-Quelle 22 ist mit einem Ausgang 205 der Überwachungsvorrichtung 26 verbunden. An den optischen Koppler 28 schließt sich das dotierte Lichtwellenleiterstück 20 an, das mit dem Ausgang 208 des faseroptischen Verstärkers verbunden ist. Ein Eingang 204 des faseroptischen Verstärkers führt auf den zweiten Photodetektor 24, der mit einem Eingang 203 der Überwachungsvorrichtung 26 verbunden ist.

Über eine Datenleitung 206 kann die Überwachungsvorrichtung Testbefehle und Meldungen empfangen oder abgeben. Über diese Datenleitung ist jeder faseroptische Verstärker an den Bus anschließbar. Die Überwachungsvorrichtung 26 ist beispielsweise ein Prozessor. Sie hat folgende für die Erfindung relevante Aufgaben und Funktionen:
- Sie erkennt wenn die Eingangsleistung des faseroptischen Verstärkers einen bestimmten Wert unterschreitet,
- Sie regelt die Pumpleistung der Pumplicht-Quelle; dies umfaßt z.B. das Abschalten der Pumplicht-Quelle im Störungsfall und das Einschalten der Pumplicht-Quelle,
- Sie überwacht die Ausgangsleistung des faseroptischen Verstärkers,
- Sie überwacht die Lichtleistung des über die Rückkopplungsfaser ankommenden Signals.

Aus dem dadurch gewonnenen und den über die Datenleitung 206 ankommenden Informationen leitet die Überwachungsvorrichtung ein oder mehrere Steuerkommandos ab.

Erfindungsgemäß ist ein solcher faseroptischer Verstärker derart ergänzt, daß die Überwachungsvorrichtung 26 Mittel enthält, durch die die Pumplicht-Quelle 22 auch bei fehlender Eingangsleistung auf einen Testbefehl hin einschaltbar ist. Dazu kann beispielsweise eine Logikschaltung oder ein geeigneter Teil des im Prozessor gespeicherten Programms vorhanden sein.

Von dem Zustand des ganz oder teilweise abgeschalteten Systems ausgehend, muß nach einer Behebung der Störungsursache die Wiederinbetriebnahme erfolgen.

Hierfür wird erfindungsgemäß der faseroptische Verstärker als Testlicht-Quelle eingesetzt. Von der zentralen Kontrolleinrichtung C (Fig. 1) erhält die Überwachungsvorrichtung 26 einen Testbefehl, worauf diese veranlaßt, daß die Pumplicht-Quelle 22 eingeschaltet wird. Der faseroptische Verstärker emittiert dann das gewünschte Testlicht. Dieses entsteht dadurch, daß die durch das Pumpen angeregten Erbium-Ionen durch spontane Emission in den Grundzustand übergehen. Vorzugsweise wird die Pumplichtquelle impulsweise eingeschaltet. Dadurch ist auch die spontane Emission aus dem dotierten Lichtwellenleiterstück impulsartig. Die Dauer eines Impulses wird gemäß des zulässigen Grenzwertes auf < 50 ms festgelegt. Der faseroptische Verstärker emittiert bei jedem Einschalten der Pumplicht-Quelle Testlicht.

Im folgenden wird beschrieben, wie die einzelnen Teilstrecken aus Fig. 1 auf Unterbrechungen überprüft werden können. Soll die Teilstrecke S1 überprüft werden, erhält der Sendelaser im Sender S von der zentralen Überwachungseinrichtung C einen Testbefehl, der ihn kurzzeitig einschaltet. Ist die Teilstrecke S1 in Ordnung, empfängt der erste faseroptische Verstärker OA1 das vom Sender S ausgesendete Licht. Die Überwachungsvorrichtung 26 des faseroptischen Verstärkers OA1 meldet der zentralen Kontrolleinrichtung C dieses ankommende Signal.

Soll die Teilstrecke S2 überprüft werden, erhält der faseroptische Verstärker OA1 von der zentralen Kontrolleinrichtung C einen Testbefehl, woraufhin seine Pumplicht-Quelle eingeschaltet wird. Das von diesem faseroptischen Verstärker ausgesendete Testlicht wird bei intakter Übertragungsstrecke im faseroptischen Verstärker OA2 detektiert. Der Empfang des Testimpulses im faseroptischen Verstärker OA2 hat eine Meldung an den vorhergehenden faseroptischen Verstärker OA1 und eine Meldung an die zentrale Kontrolleinrichtung C zur Folge.

Zur Überprüfung der Teilstrecke S3 sendet die zentrale Kontrolleinrichtung C einen Testbefehl an den faseroptischen Verstärker OA2, der daraufhin Testlicht aussendet. Ist die Teilstrecke S3 in Ordnung, wird das Testlicht über die Rückkopplungsfaser 11 an den Eingang 204 des sendenden faseroptischen Verstärkers OA2 zurückgeführt. Dessen Überwachungsvorrichtung 26 erkennt dies, und gibt an die zentrale Kontrolleinrichtung C die Information weiter, daß die Teilstrecke S3 in Ordnung ist. Durch dieses Verfahren zum Testen der Übertragungsstrecke lassen sich vorteilhaft auch verteilte Netze überprüfen.

Dadurch, daß die einzelnen faseroptischen Verstärker miteinander verbunden sind und Informationen austauschen können, sind beliebige einzelne Teilstrecken testbar.

Sollen einfache Verkabelungsfehler erkannt werden, darf immer nur ein faseroptischer Verstärker Testlicht aussenden. Die Pumplicht-Quellen werden deshalb zyklisch angesteuert; die Einschaltberechtigung wird zyklisch von der Kontrolleinrichtung vergeben.

Das Erkennen von Verkabelungsfehlern ist möglich, da jeder faseroptische Verstärker seinen/seine Nachfolger kennt und somit festgelegt ist, wo Testlicht empfangen werden muß, wenn ein faseroptischer Verstärker sendet.

Liegen z.B. die in Fig. 1 gezeigten faseroptischen Verstärker in einem Zweig eines verteilten Systems, darf nur der zweite faseroptische Verstärker OA2 empfangen, wenn der erste faseroptische Verstärker OA1 Testlicht sendet.

Die Leistung des ausgesendeten Testlichts ist so festgelegt, das von ihnen keine Gefährdung des menschlichen Auges ausgeht; sie entsprechen den zulässigen Grenzwerten.

## Patentansprüche

1. System zur optischen Nachrichtenübertragung über Lichtwellenleiter mit mindestens einem faseroptischen Verstärker (OA), der eine Pumplicht-Quelle (22) und eine Vorrichtung zur Überwachung (26) der optischen Eingangsleistung und der Pumplicht-Quelle enthält,
**dadurch gekennzeichnet,** daß die Überwachungsvorrichtung (26) Mittel enthält, durch die die Pumplicht-Quelle (22) auch bei fehlender Eingangsleistung auf einen Testbefehl hin einschaltbar ist.

2. Faseroptischer Verstärker (OA) für ein System zur optischen Nachrichtenübertragung, der eine Pumplicht-Quelle (22) und eine Vorrichtung zur Überwachung (26) der optischen Eingangsleistung und der Pumplicht-Quelle enthält,
**dadurch gekennzeichnet,** daß die Überwachungsvorrichtung (26) Mittel enthält, durch die die Pumplicht-Quelle (22) auch bei fehlender Eingangsleistung auf einen Testbefehl hin einschaltbar ist.

3. Verfahren zum Testen eines Systems zur optischen Nachrichtenübertragung über Lichtwellenleiter mit mindestens einem faseroptischen Verstärker (OA),
**dadurch gekennzeichnet,** daß der faseroptische Verstärker (OA) auch bei fehlender Eingangsleistung auf einen Testbefehl hin eingeschaltet wird und er dadurch als Testlicht-Quelle wirkt.

## Claims

1. A system for optical communication via optical waveguides with at least one fibre optic amplifier , which contains a pump light source and a device for monitoring the optical input power and the pump light source, characterised in that the monitoring device contains means by which the pump light source can be switched on in response to a test command, even in the absence of any input power.

2. A fibre optic amplifier for an optical communication system which has a pump light source and a device for monitoring the optical input power and the pump light source, characterised in that the monitoring device contains means by which the pump light source can be switched on in response to a test command, even in the absence of any input power.

3. A method for testing a system for optical communications via optical waveguides with at least one fibre optic amplifier, characterised in that the fibre optic amplifier is switched on in response to a test command, even in the absence of any input power, and thus acts as a test light source.

## Revendications

1. Système de transmission optique des messages par l'intermédiaire de guides d'ondes lumineuses, comprenant au moins un amplificateur à fibres optiques (OA), qui contient une source de lumière de pompage (22) et un dispositif de contrôle (26) de la puissance d'entrée optique et de la source de lumière de pompage,
caractérisé en ce que le dispositif de contrôle (26) contient des moyens permettant, à la suite d'une commande de test, de mettre en circuit la source de lumière de pompage (22), même en cas d'absence d'une puissance d'entrée.

2. Amplificateur à fibres optiques (OA) pour un système de transmission optique des messages, lequel amplificateur contient une source de lumière de pompage (22) et un dispositif de contrôle (26) de la puissance d'entrée optique et de la source de lumière de pompage,
caractérisé en ce que le dispositif de contrôle (26) contient des moyens permettant, à la suite d'une commande de test, de mettre en circuit la source de lumière de pompage (22), même en cas d'absence d'une puissance d'entrée.

3. Procédé pour tester un système de transmission optique des messages par l'intermédiaire de guides d'ondes lumineuses, comprenant au moins un amplificateur à fibres optiques (OA),
caractérisé en ce que l'amplificateur à fibres optiques (OA) est mis en circuit à la suite d'une commande de test, même en cas d'absence d'une puissance d'entrée, et que de ce fait il agit comme une source de lumière de contrôle.
